# EUROPÄISCHE PATENTSCHRIFT

(11) **EP 2 268 516 B1**
(45) Veröffentlichungstag und Bekanntmachung des Hinweises auf die Patenterteilung: **12.11.2014**
(21) Anmeldenummer: 09731804.2
(22) Anmeldetag: 25.03.2009
(51) Int. Cl.: B60T 8/40, F04B 49/22

(54) **DRUCKERZEUGER EINER HYDRAULISCHEN FAHRZEUG-BREMSANLAGE UND BETRIEBSVERFAHREN HIERFÜR**
PRESSURE GENERATOR OF A HYDRAULIC VEHICLE BRAKE SYSTEM AND OPERATING METHOD FOR THIS
GÉNÉRATEUR DE PRESSION D UN DISPOSITIF DE FREINAGE HYDRAULIQUE DE VÉHICULE ET PROCÉDÉ DE FONCTIONNEMENT ASSOCIÉ

(30) Priorität: 16.04.2008 DE 102008019148
(43) Veröffentlichungstag der Anmeldung: 05.01.2011
(73) Patentinhaber: Lucas Automotive GmbH, 56070 Koblenz (DE)
(72) Erfinder: KÖTH, Boris, 56191 Weitersburg (DE)
(74) Vertreter: Beyer, Andreas
(86) Internationale Anmeldenummer: PCT/EP2009/002200
(87) Internationale Veröffentlichungsnummer: WO 2009/127317

(56) Entgegenhaltungen:
- EP-A- 1 408 388
- EP-A- 1 733 942
- WO-A-98/00322
- WO-A-99/64283
- DE-A1- 4 138 313
- DE-A1- 4 438 721

## Beschreibung

### Technisches Gebiet

Die vorliegende Erfindung betrifft allgemein die Hydraulik-Druckerzeugung in einer Fahrzeug-Bremsanlage. Insbesondere ist die Erfindung auf einen Druckerzeuger mit einer Mehrkolbenpumpe gerichtet.

### Technischer Hintergrund

Moderne hydraulische oder elektrohydraulische Fahrzeug-Bremsanlagen erfordern zuverlässige Druckerzeuger, um sicherheitsrelevante Funktionen wie das Verhindern eines Blockierens der Bremse oder das Verhindern durchdrehender Räder implementieren zu können. Hierzu wirken Fahrerunterstützungssysteme wie eine Antiblockierregelung (ABS), eine Antischlupfregelung (ASR) oder eine Fahrdynamikregelung und eine adaptive Geschwindigkeitsregelung (ACC) mit einem Druckerzeuger der Fahrzeug-Bremsanlage zusammen.

Derartige bekannte Bremssysteme arbeiten mit einer Hydraulikflüssigkeit als Bremsfluid, die zum Teil in einem dafür vorgesehenen Vorratsbehälter bevorratet ist. Das Bremsfluid wird zum Erzeugen von Bremsdruck in einem Bremskreis unter Druck gesetzt und wirkt auf diese Weise zur Ansteuerung einer oder mehrerer Radbremsen. Hierzu dient bei einem von einem Fahrer veranlassten Bremsvorgang (nachfolgend als Fahrerbremsung bezeichnet) ein Hauptbremszylinder, der durch Druck des Fahrers auf ein Fußpedal betätigt wird. Im Unterschied hierzu wird bei einer Bremsung, die nicht durch den Fahrer, sondern von einem Fahrerunterstützungssystem angefordert wird (nachfolgend als Systembremsung bezeichnet), der benötigte Bremsdruck von einem Druckerzeuger erzeugt. Einen dritten möglichen Betriebszustand einer derartigen Fahrzeug-Bremsanlage stellt der Mischbetrieb dar, d.h. eine Bremsung, die sowohl vom Fahrer als auch vom System veranlasst wird (nachfolgend als Mischbremsung bezeichnet).

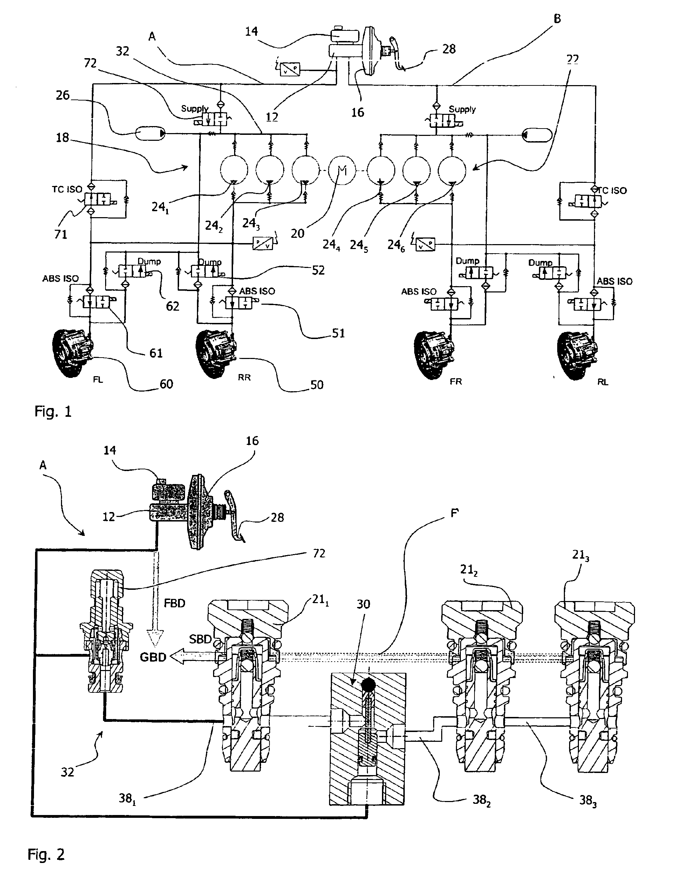

Zum besseren Verständnis ist nachfolgend eine Fahrzeug-Bremsanlage aus dem Stand der Technik beschrieben. Diese weist gemäß Fig. 1 zwei Bremskreise A und B auf, die im wesentlichen identisch aufgebaut sind. Es wird daher nur der erste Bremskreis A, der zwei Radbremsen 50 und 60 versorgt, genauer beschrieben.

Bei einer Fahrerbremsung fördert ein Hauptzylinder 12 ein Bremsfluid aus einem Vorratsbehälter 14 in die beiden Bremskreise A und B. Zwischen dem Hauptzylinder 12 und den Radbremsen 50 und 60 besteht eine hydraulische Verbindung, die von Ventilen 51, 52, 61, 62, 71 und 72 gesteuert wird. Bei einer reinen Fahrerbremsung nehmen die Ventile 51, 61 und 71 jeweils ihre Durchflussstellung ein, während die Ventile 52, 62 und 72 in einer Sperrstellung verbleiben. Üblicherweise finden hierbei sogenannte 2/2-Wegeventile als Ventile Verwendung, d.h. Ventile mit zwei Anschlüssen und zwei Schaltstellungen (offen und geschlossen). Bei einer reinen Fahrerbremsung wirkt nur der vom Hauptzylinder 12 und ggf. einem zusätzlichen Bremskraftverstärker 16 in bekannter Weise erzeugte Bremsdruck FBD (Fahrer-Bremsdruck) in den Radbremsen 50 und 60.

Bei einer Systembremsung hingegen wird der Bremsdruck SBD (System-Bremsdruck), wie vorstehend schon erläutert, von einem Druckerzeuger 18 erzeugt. Dieser weist hierzu einen Aktuator 20 auf, der eine Kolbenpumpe, insbesondere eine Mehrkolbenpumpe 22 antreibt. Diese kann, wie in Fig. 1 gezeigt, beispielsweise je Bremskreis A bzw. B drei Druckkammern 24₁, 24₂, 24₃ (allgemein mit dem Referenzzeichen 24 bezeichnet) und zugeordnete, auf die Druckkammern einwirkende Pumpenkolben aufweisen, welche über einen gemeinsamen Exzenter mit dem Aktuator 20 verbunden sind. Die Mehrkolbenpumpe 22 ist eingangsseitig mit dem Vorratsbehälter 14 der Bremsanlage 10 verbunden und saugt im betätigten Zustand Bremsfluid daraus an, welches von den Pumpenkolben durch Einwirken auf die Druckkammern 24₁, 24₂, 24₃ in Richtung der Radbremsen 50 und 60 gefördert wird.

Bei einer Antiblockierregelung (ABS) soll während einer Bremsung ein Blockieren der Räder verhindert werden. Hierzu wird der an den Radbremsen 50 und 60 wirkende Bremsdruck GBD (Gesamt-Bremsdruck) durch eine zeitliche Abfolge von Druckaufbau-, Druckhalte- und Druckabbauphasen eingestellt. Dies geschieht durch die Ansteuerung der den Radbremsen 50 bzw. 60 zugeordneten Ventile 51, 52 bzw. 61, 62. Diese werden in bekannter Weise eingestellt, so dass nach Erreichen eines gewünschten Bremsdrucks GBD dieser während der Druckhaltephase gehalten wird (geschlossene Ventilstellung), während in einer Druckaufbau- oder Druckabbauphase die Hydraulikflüssigkeit zur Radbremse 50 bzw. 60 oder von dieser weg fließen kann (offene Ventilstellung). Zum Zwischenspeichern der Hydraulikflüssigkeit dient ein Niederdruckspeicher 26, von dem aus die Hydraulikflüssigkeit mit der Mehrkolbenpumpe 22 in den Bremskreis A bzw. B zurückgefördert wird.

Im Betriebszustand einer ABS-Regelung liegt im Regelfall ein Mischbetrieb der Bremsanlage 10 vor, da neben der vom System veranlassten Druckerzeugung durch den Druckerzeuger 18 der Fahrer zusätzlich über ein Fußpedal 28 den Hauptzylinder 12 betätigt.

Bei einer normalen Fahrerbremsung treten in Abhängigkeit von der Verwendung eines Bremskraftverstärkers 16 und/oder der durch den Fahrer über das Fußpedal 28 eingebrachten Bremskraft im Regelfall Bremsdrücke im Bereich von bis zu etwa 80 bar auf. In dem vorstehend beschriebenen Mischbetrieb im Zusammenhang mit einer ABS-Regelung können jedoch in speziellen Fahrsituationen Drücke von etwa 200 bar erzeugt werden. Dies kann insbesondere dann passieren, wenn eine ABS-Regelung über eine längere Zeit andauert, beispielsweise weil die Fahrbahn einen niedrigen Reibwert (µ low) aufweist. In diesem Fall wird der Niederdruckspeicher 26 vollständig gefüllt, so dass die Pumpenkolben gegen den herrschenden Bremsdruck GBD fördern müssen und diesen dabei weiter erhöhen. Bei Drücken in einer Größenordnung von etwa 200 bar kann der die Pumpenkolben antreibende Aktuator 20 jedoch, wie die Praxis gezeigt hat, aufgrund der herrschenden Belastung durch den gegen die Förderrichtung der Pumpenkolben wirkenden Fluiddruck zum Stillstand kommen. Dies hat zur Folge, dass die gesamte ABS-Regelung ausfällt und somit ihre sicherheitsrelevante Funktion nicht mehr erfüllen kann.

Derartige Fahrzeugbremsanlagen sind beispielsweise aus der EP 1 733 942 A1 und der WO 99/64283 bekannt.

Um einem solchen Ausfall entgegenzuwirken, sind aus dem Stand der Technik Lösungsansätze bekannt, bei denen durch eine Verkleinerung der Wirkfläche der Pumpenkolben die auf diese wirkende Reaktionslast verringert werden soll. Eine Verkleinerung der Wirkflächen der Pumpenkolben beeinflusst jedoch auch die Leistung der Mehrkolbenpumpe 22 hinsichtlich ihres Fördervolumens und der Dynamik nachteilig.

Im Zusammenhang mit Verdrängungspumpen ist es ferner bekannt, jeder Pumpeneinheit einen eigenen Saugkanal zuzuordnen, in dem jeweils ein Drosselventil angeordnet ist. Auf diese Weise besteht die Möglichkeit, die Durchflussgeschwindigkeit des Arbeitsfluids einer Pumpeneinheit unabhängig von der Durchflussgeschwindigkeit der anderen Pumpeneinheiten zu regulieren.

Schließlich ist auf dem technischen Gebiet der Kraftstoffeinspritzeinrichtungen einer Brennkraftmaschine eine Durchflussregeleinrichtung gemäß der Offenbarung der EP 1 408 388 A1 bekannt, die ein Durchflussregelventil und einen elektromagnetischen Aktor zu dessen Betätigung aufweist. Der Aktor weist einen in einem Gehäuse innerhalb einer Magnetspule verschiebbar geführten Magnetanker auf. Durch diesen ist zumindest mittelbar ein Ventilglied des Durchflussregelventils verschiebbar, das in einem an das Gehäuse anschließenden Ventilgehäuse geführt ist. Abhängig von einer Verschiebung des Ventilglieds können unterschiedlich große Durchflussquerschnitte eingestellt werden.

Daher ist es Aufgabe der vorliegenden Erfindung, einen Druckerzeuger bereitzustellen, der eine sichere und zuverlässige Funktionsweise auch in den vorstehend beschriebenen Bremssituationen gewährleisten kann, ohne dass seine Leistung im Normalbetrieb (d.h. wenn nicht derartige Spitzenwerte für einen herrschenden Bremsdruck auftreten) eingeschränkt ist.

Diese Aufgabe ist durch einen Druckerzeuger mit den im Anspruch 1 angegebenen Merkmalen gelöst. Der erfindungsgemäße Druckerzeuger weist hierzu eine Mehrkolbenpumpe zur Förderung eines Bremsfluids mit wenigstens zwei Pumpenkolben und zugeordneten Druckkammern auf, auf die die Pumpenkolben wirken, einen Aktuator zur Betätigung der Mehrkolbenpumpe, sowie einen Fluidzulauf, der sich zu den Druckkammern erstreckt und zum Anschluss an einen Vorratsbehälter ausgebildet ist, in dem eine Hydraulikflüssigkeit bevorratet ist. In dem Fluidzulauf ist wenigstens ein Ventil angeordnet und unterteilt diesen in einen ersten, stromaufwärts des Ventils angeordneten Abschnitt und in einen zweiten, stromabwärts des Ventils angeordneten Abschnitt. Dabei ist das Ventil dazu ausgebildet, den zweiten Abschnitt des Fluidzulaufs wahlweise wenigstens teilweise zu sperren oder freizugeben und damit die Fluidversorgung wenigstens einer Druckkammer zu steuern. Der Fluidzulauf weist zudem pumpenseitig für jede Druckkammer einen separaten Verbindungsabschnitt auf, wobei wenigstens zwei Verbindungsabschnitte in Flussrichtung des Fluids in Reihe geschaltet sind und das Ventil in einem Verbindungsabschnitt der in Reihe geschalteten Verbindungsabschnitte angeordnet ist, um die in Flussrichtung nachfolgenden Verbindungsabschnitte wenigstens teilweise zu sperren oder freizugeben. Auf diese Weise ist es möglich, bei einem Auftreten von Druckspitzen um die 200 bar die Flussmenge des von dem Druckerzeuger bzw. der Mehrkolbenpumpe geförderten Bremsfluids herabzusetzen und damit die auf die Pumpenkolben wirkende Reaktionslast zu verringern. In einem solchen Fall treibt der Aktuator die Pumpenkolben nur noch in dem Maße an, wie die zugeordneten Druckkammern mit Bremsfluid versorgt werden (eingeschränkte Förderleistung). Gleichzeitig ist es im Normalbetrieb, d.h. bei Drücken um bis zu etwa 80 bar, möglich, die Mehrkolbenpumpe mit der vollen Förderleistung zu betreiben. Zudem kann durch Anordnung des Ventils in wenigstens einem der separaten Verbindungsabschnitte grundsätzlich jede Druckkammer unabhängig von den anderen Druckkammern ventilgesteuert mit Fluid versorgt werden.

Die Reihenschaltung der Verbindungsabschnitte (d.h. dass die Verbindungsabschnitte miteinander verbunden sind und Bremsfluid zunächst erste Verbindungsabschnitte passieren muss, um zu den in Flussrichtung nachfolgenden zu gelangen) hat den Vorteil, dass mit einem einzigen Ventil die Fluidversorgung mehrerer in Flussrichtung nachfolgender Verbindungsabschnitte der zugehörigen Druckkammern gesteuert werden kann. Hierbei ist denkbar, dass das Ventil in einem ersten Verbindungsabschnitt angeordnet ist und so die Fluidversorgung aller nachfolgenden Druckkammern steuert. Alternativ kann das Ventil in einem letzten Verbindungsabschnitt angeordnet sein und so nur die Fluidversorgung der letzten Druckkammer steuern. Schließlich kann das Ventil in einem dazwischen liegenden Verbindungsabschnitt angeordnet sein.

Weiterhin ist es auch möglich, mehrere Ventile in den Verbindungsabschnitten in Reihe zu schalten. So kann beispielsweise in dem ersten und in dem letzten Verbindungsabschnitt jeweils ein Ventil angeordnet sein. Dies ermöglicht neben der Steuerung der Fluidversorgung ggf. die Abschaltung einzelner Verbindungsabschnitte. So kann ein Ventil, das in einem ersten Verbindungsabschnitt angeordnet ist, die Fiuidversorgung der nachfolgenden Druckkammern verringern und ein weiteres, in einem letzten Verbindungsabschnitt angeordnetes Ventil kann wahlweise die Fluidversorgung der nachfolgenden Druckkammer vollständig sperren.

Die Erfindung betrifft zudem eine hydraulische Fahrzeugbremsanlage mit einem Druckerzeuger zum geregelten Erzeugen eines hydraulischen Bremsdrucks in einem Bremskreis, wobei der Druckerzeuger die vorstehend genannten Merkmale umfasst.

Gemäß einer bevorzugten Ausgestaltung der Erfindung ist das Ventil ansteuerbar. In einer Weiterbildung der Erfindung kann das Ventil elektrisch ansteuerbar sein. Alternativ sind jedoch auch andere Arten der Einstellung des Ventils denkbar, so kann es auch pneumatisch, hydraulisch, mechanisch oder manuell betätigt werden.

Alternativ kann vorgesehen sein, dass das Ventil seine Ventilstellung abhängig von einem in dem Bremskreis herrschenden Bremsdruck ändert, so dass dadurch das Durchflussvolumen des Ventils selbsttätig, d.h. ohne externe Betätigung oder Ansteuerung, gesteuert wird.

Gemäß einem weiteren Aspekt der vorliegenden Erfindung wird die Aufgabe mit Hilfe eines Verfahrens zum Betreiben eines Druckerzeugers mit den vorstehend genannten Merkmalen in einer hydraulischen Fahrzeugbremsanlage gelöst. Dieses Verfahren umfasst die Schritte des Betätigens der Mehrkolbenpumpe, des Erfassens eines in dem Bremskreis herrschenden Bremsdrucks, und des druckabhängigen Ansteuerns des wenigstens einen in dem Fluidzulauf angeordneten Ventils zum Regulieren der Fluidversorgung wenigstens einer Druckkammer der Mehrkolbenpumpe.

Die Erfindung wird im Folgenden beispielhaft anhand der beiliegenden schematischen Figuren näher erläutert. Es stellen dar:
- Fig. 1: eine schematische Ansicht einer Fahrzeug-Bremsanlage gemäß dem Stand der Technik,
- Fig. 2: eine schematische Ansicht einer möglichen Einbausituation eines erfindungsgemäßen Ventils in einem Bremskreis,
- Fig. 3: ein Diagramm zur Veranschaulichung des Druckverlaufs bzw. Stromverbrauchsverlauf mit und ohne erfindungsgemäßem Ventil.

In Fig. 1 ist, wie bereits eingangs detaillierter ausgeführt, eine Fahrzeug-Bremsanlage aus dem Stand der Technik dargestellt, die zwei Bremskreise A und B umfasst. Ein Hauptzylinder 12 fördert auf Betätigung eines Fußpedals 28 durch den Fahrer des Fahrzeugs ein Bremsfluid aus einem Vorratsbehälter 14 in die beiden identischen Bremskreise A und B. Auf diese Weise werden die jeweiligen Radbremsen 50 und 60 über die Bremskreise A und B versorgt und es wird ein FahrerBremsdruck FBD in den Radbremsen 50 und 60 aufgebaut.

Ein Druckerzeuger 18 erzeugt auf ein Signal des Bremssystems hin einen SystemBremsdruck SBD in den Radbremsen 50 und 60, indem er mittels eines Aktuators 20 eine Mehrkolbenpumpe 22 antreibt. Die Mehrkolbenpumpe 22 umfasst in dem in Fig. 1 dargestellten Beispiel sechs Druckkammern 24₁, 24₂, 24₃, 24₄, 24₅, 24₆ (allgemein mit dem Referenzzeichen 24 bezeichnet), wobei die Druckkammern 24₁, 24₂, 24₃ dem Bremskreis A zugeordnet sind. Die Mehrkolbenpumpe 22 ist ferner über einen Fluidzulauf 32, der sich zu den Druckkammern 24 der Mehrkolbenpumpe 22 erstreckt, mit dem Vorratsbehälter 14 verbunden und fördert mit ihren den Pumpenkolben zugeordneten Druckkammern 24 das Bremsfluid in die Bremskreise A und B.

In Fig. 2 ist eine beispielhafte Einbausituation eines erfindungsgemäßen Ventils 30 in einem vereinfacht dargestellten Bremskreislauf A gemäß Fig. 1 gezeigt. Der Bremskreislauf A weist ein Ventil 72 sowie einen Fluidzulauf 32 auf, der drei Druckkammern 24₁, 24₂, 24₃ einer Mehrkolbenpumpe mit dem Vorratsbehälter 14 der Bremsanlage verbindet. In einem pumpenseitigen Bereich, d.h. einem den Pumpen zugewandten Abschnitt, weist der Fluidzulauf drei separate Verbindungsabschnitte 38₁, 38₂, 38₃ auf, die jeweils einer Druckkammer 24₁, 24₂, 24₃ zugeordnet sind.

Das Ventil 30 ist zwischen zwei der in Reihe geschalteten Verbindungsabschnitte 38₁ und 38₂ des Fluidzulaufs 32 angeordnet und steuert so die Fluidversorgung der zugehörigen Druckkammern 24₂ und 24₃, die bei Offenstellung des Ventils durch die in Flussrichtung des Fluids nachfolgenden Verbindungsabschnitte 38₂ und 38₃ mit Bremsfluid versorgt werden.

Im dargestellten Beispiel der Fig. 2 wird mittels des Ventils 30 die Fluidversorgung der Druckkammern 24₂ und 24₃ vollständig unterbunden, so dass die zugeordneten Pumpenkolben nahezu ohne Widerstand leer laufen, d.h. kein Bremsfluid zu den Radbremsen fördern, wie durch den gestrichelten Pfeil F' angedeutet. Der Systembremsdruck SBD wird in dem in Fig. 2 dargestellten Bremskreis A nur von dem ersten, der Druckkammer 24₁ zugeordneten Pumpenkolben erzeugt.

Zusätzlich wird bei der in Fig. 2 dargestellten Fahrsituation von dem Fahrer durch Druck auf das Fußpedal 28 der Hauptbremszylinder 12 betätigt, so dass sich zu dem Systembremsdruck SBD ein entsprechender Fahrerbremsdruck FBD addiert. Das vorgeschaltete Ventil 72 ermöglicht durch seine Offenstellung dem Druckerzeuger 18, den gesamten Fluidzulauf 32 mit Bremsfluid aus dem Vorratsbehälter 14 zu versorgen. Der Fahrerbremsdruck FBD kann durch den Bremskraftverstärker 16, wie in modernen Bremssystemen üblich, weiter erhöht werden.

Wird das Ventil 30 in eine geöffnete Stellung gebracht, beispielsweise durch eine druckabhängige Selbststeuerung oder eine elektrische Ansteuerung des Ventils, werden die Verbindungsabschnitte 38₂ und 38₃ wieder mit Bremsfluid versorgt und erzeugen bei Betätigung des Aktuators, der die Pumpenkolben einer Mehrkolbenpumpe antreibt (in Fig. 2 nicht dargestellt), einen entsprechend höheren Systembremsdruck SBD.

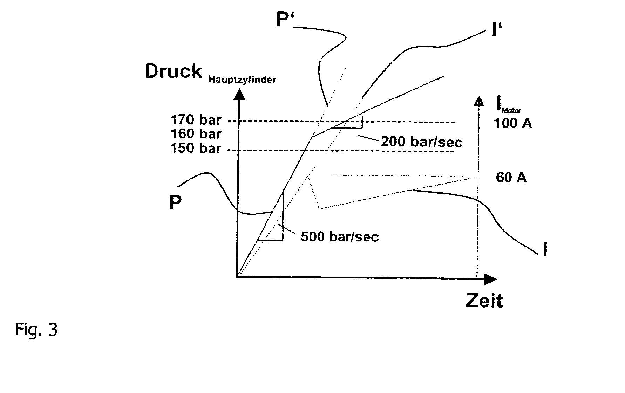

Fig. 3 zeigt beispielhaft ein Diagramm zur Veranschaulichung eines zu erwartenden Druckverlaufs P über der Zeit nach Betätigen eines erfindungsgemäßen Ventils in Schließrichtung, d.h. wenn die Fluidversorgung wenigstens einer Druckkammer 24 der Pumpe 22 verringert ist, bzw. bei geöffneter Stellung eines erfindungsgemäßen Ventils (angedeutet durch die gestrichelte Linie P'). Ebenfalls dargestellt ist der zu erwartende Stromverbrauch I des Motors zur Betätigung der Mehrkolbenpumpe über der Zeit nach Betätigen eines erfindungsgemäßen Ventils in Schließrichtung bzw. bei geöffneter Stellung eines erfindungsgemäßen Ventils (angedeutet durch gestrichelte Linie I').

In der Phase des Druckanstiegs wird das Ventil 30 angesteuert, sobald der Fluiddruck einen bestimmten Bereich erreicht, in dem dargestellten Beispiel etwa 150 bis 170 bar. Auf diese Weise werden die in Flussrichtung des Fluids stromabwärts des Ventils 30 angeordneten Verbindungsabschnitte vollständig oder wenigstens teilweise gesperrt und damit - wie vorstehend bereits ausgeführt - die Fluidversorgung der an diese Verbindungsabschnitte angeschlossenen Druckkammern verringert. Infolgedessen fördern ihre zugeordneten Druckkolben nur eine verringerte Fluidmenge bzw. überhaupt kein Bremsfluid mehr. Der Fluiddruck P steigt ab diesem Zeitpunkt nicht mehr in demselben Maße wie zuvor. Dies ist in dem Diagramm der Fig. 3 an der verringerten Steigung der Druckkurve nach Zuschaltung des erfindungsgemäßen Ventils in dem Fluidzulauf zu erkennen.

In Fig. 3 ist ebenfalls gezeigt, dass die Zuschaltung des Ventils den Stromverbrauch des Motors, dargestellt durch die Verbrauchskurve I, beeinflusst, der die Mehrkolbenpumpe antreibt. Mit Betätigen des Ventils in Schließrichtung und damit Verringerung der durch die Mehrkolbenpumpe geförderten Fluidmenge fällt der Stromverbrauch I deutlich ab. Da sich im weiteren Verlauf der Fluiddruck P dennoch weiter aufbaut, steigt auch der Verbrauch I wieder an, allerdings infolge der verringerten Förderleistung auf ein niedrigeres Niveau.

Fig. 3 zeigt somit anschaulich, wie die Aufgabe, einen Druckerzeuger bereitzustellen, der eine sichere und zuverlässige Funktionsweise auch in Bremssituationen gewährleisten kann, in denen Druck-Spitzenwerte erreicht werden, ohne seine Leistung im Normalbetrieb einzuschränken, mit dem erfindungsgemäßen Druckerzeuger erfüllt wird.

## Patentansprüche

1. Druckerzeuger (18) für eine hydraulische Fahrzeugbremsanlage (10) zum geregelten Erzeugen eines hydraulischen Bremsdrucks (HP) in einem Bremskreis (A, B), wobei der Druckerzeuger (18) aufweist:
- eine Mehrkolbenpumpe (22) zur Förderung eines Bremsfluids mit wenigstens zwei Pumpenkolben und zugeordneten Druckkammern (24), auf die die Pumpenkolben wirken,
- einen Aktuator (20) zur Betätigung der Mehrkolbenpumpe (22), sowie
- einen Fluidzulauf (32), der sich zu den Druckkammern (24) erstreckt und zum Anschluss an einen Vorratsbehälter (14) ausgebildet ist, in dem eine Hydraulikflüssigkeit bevorratet ist,
wobei wenigstens ein Ventil (30) in dem Fluidzulauf (32) angeordnet ist und diesen in einen ersten stromaufwärts des Ventils (30) angeordneten Abschnitt und in einen zweiten stromabwärts des Ventils (30) angeordneten Abschnitt unterteilt, wobei das Ventil (30) dazu ausgebildet ist, den zweiten Abschnitt des Fluidzulaufs (32) wahlweise wenigstens teilweise zu sperren oder freizugeben und damit die Fluidversorgung wenigstens einer Druckkammer (24) zu steuern,
**dadurch gekennzeichnet, dass** der Fluidzulauf (32) pumpenseitig für jede Druckkammer (24₁, 24₂, 24₃, 24₄, 24₅, 24₆) einen separaten Verbindungsabschnitt (38₁, 38₂, 38₃, 38₄, 38₅, 38₆) aufweist, und
dass wenigstens zwei Verbindungsabschnitte (38₁, 38₂, 38₃, 38₄, 38₅, 38₆) in Flussrichtung des Fluids in Reihe geschaltet sind, wobei das Ventil (30) in einem Verbindungsabschnitt (38₁, 38₂, 38₃, 38₄, 38₅, 38₆) der in Reihe geschalteten Verbindungsabschnitte (38₁, 38₂, 38₃, 38₄, 38₅, 38₆) angeordnet ist, um die in Flussrichtung nachfolgenden Verbindungsabschnitte (38₁, 38₂, 38₃, 38₄, 38₅, 38₆) wenigstens teilweise zu sperren oder freizugeben.

2. Druckerzeuger nach Anspruch 1,
**dadurch gekennzeichnet, dass** das Ventil (30) ansteuerbar ist.

3. Druckerzeuger nach Anspruch 2,
**dadurch gekennzeichnet, dass** das Ventil (30) elektrisch ansteuerbar ist.

4. Druckerzeuger nach Anspruch 1,
**dadurch gekennzeichnet, dass** das Ventil (30) dazu ausgebildet ist, seine Ventilstellung abhängig von einem in dem Bremskreis (A, B) herrschenden Bremsdruck (HP) zu ändern.

5. Hydraulische Fahrzeugbremsanlage (10) mit einem Druckerzeuger (18) nach einem der vorhergehenden Ansprüche zum geregelten Erzeugen eines hydraulischen Bremsdrucks in einem Bremskreis (A, B).

6. Verfahren zum Betreiben eines Druckerzeugers (18) nach einem der vorhergehenden Ansprüche 1 bis 4 in einer hydraulischen Fahrzeugbremsanlage (10), die nachfolgenden Schritte umfassend:
- Betätigen der Mehrkolbenpumpe (22);
- Erfassen eines in dem Bremskreis (A, B) herrschenden Bremsdruckes (HP); und
- Druckabhängiges Ansteuern des wenigstens einen in dem Fluidzulauf (32) angeordneten Ventils (30) zum Regulieren der Fluidversorgung wenigstens einer Druckkammer (24).

## Claims

1. Pressure generator (18) for a hydraulic vehicle brake system (10) for the regulated generation of a hydraulic brake pressure (HP) in a brake circuit (A, B), the pressure generator (18) comprising:
- a multiple-piston pump (22) for delivering a brake fluid with at least two pump pistons and associated pressure chambers (24), on which the pump pistons act,
- an actuator (20) for actuating the multiple-piston pump (22), and
- a fluid feed line (32) which extends to the pressure chambers (24) and is configured for connection to a storage container (14), in which a hydraulic fluid is stored,
wherein at least one valve (30) is arranged in the fluid feed line (32) dividing the latter into a first section which is arranged upstream of the valve (30) and into a second section which is arranged downstream of the valve (30), wherein the valve (30) is configured to optionally at least partly shut off or open the second section of the fluid feed line (32) to thereby control the fluid supply of at least one pressure chamber (24),
**characterised in that** the fluid feed line (32) has, on the pump side, a separate connecting section (38₁, 38₂, 38₃, 38₄, 38₅, 38₆) for each pressure chamber (24₁, 24₂, 24₃, 24₄, 24₅, 24₆), and
**in that** at least two connecting sections (38₁, 38₂, 38₃, 38₄, 38₅, 38₆) are connected in series in the flow direction of the fluid and the valve (30) is arranged in one connecting section (38₁, 38₂, 38₃, 38₄, 38₅, 38₆) of the connecting sections (38₁, 38₂, 38₃, 38₄, 38₅, 38₆) connected in series, in order to at least partly shut off or open the connecting sections (38₁, 38₂, 38₃, 38₄, 38₅, 38₆) following in the flow direction.

2. Pressure generator according to one of Claims 1 to 3,
**characterised in that** the valve (30) is actuatable.

3. Pressure generator according to Claim 2,
**characterised in that** the valve (30) is electrically actuatable.

4. Pressure generator according to one of Claims 1,
**characterised in that** the valve (30) is configured to change its valve position in dependence on a brake pressure (HP) prevailing in the brake circuit (A, B).

5. Hydraulic vehicle brake system (10) including a pressure generator (18) according to any one of the preceding claims for the regulated generation of a hydraulic brake pressure (HP) in a brake circuit (A, B).

6. Method for operating a pressure generator (18) according to one of the preceding claims 1 to 4 in a hydraulic vehicle brake system (10), comprising the following steps:
- actuating the multiple-piston pump (22);
- detecting a brake pressure (HP) prevailing in the brake circuit (A, B); and
- pressure-dependent actuating of the at least one valve (30) arranged in the fluid feed line (32) for regulating the fluid supply of at least one pressure chamber (24).

## Revendications

1. Générateur de pression (18) pour un dispositif de freinage hydraulique de véhicule (10), destiné à générer de manière régulée une pression de freinage hydraulique (HP) dans un circuit de freinage (A, B), ce générateur de pression (18) présentant :
- une pompe à pistons multiples (22) destinée à faire circuler un fluide de freinage et comportant au moins deux pistons de pompe et des chambres de compression (24) associées, sur lesquelles agissent les pistons de pompe,
- un actionneur (20) pour actionner la pompe à pistons multiples (22), ainsi que
- une arrivée de fluide (32) qui s'étend vers les chambres de compression (24) et qui est conçue pour être raccordée à un réservoir (14), dans lequel est stocké un liquide hydraulique,
au moins une soupape (30) étant disposée dans l'arrivée du fluide (32) et divisant cette dernière en une première section disposée en amont de la soupape (30) et en une deuxième section disposée en aval de la soupape (30), la soupape (30) étant réalisée de manière à fermer ou à ouvrir, au choix, au moins partiellement la deuxième section de l'arrivée de fluide (32) et à commander ainsi l'alimentation en fluide d'au moins une chambre de compression (24),
**caractérisé en ce que** l'arrivée de fluide (32) présente côté pompe, pour chaque chambre de compression (24₁, 24₂, 24₃, 24₄, 24₅, 24₆) une section de raccordement séparée (38₁, 38₂, 38₃, 38₄, 38₅, 38₆), et
**en ce qu'**au moins deux sections de raccordement (38₁, 38₂, 38₃, 38₄, 38₅, 38₆) sont montées en série dans la direction d'écoulement du fluide, la soupape (30) étant disposée dans une section de raccordement (38₁, 38₂, 38₃, 38₄, 38₅, 38₆) des sections de raccordement montées en série pour fermer ou ouvrir au moins partiellement les sections de raccordement (38₁, 38₂, 38₃, 38₄, 38₅, 38₆) suivantes dans la direction de l'écoulement.

2. Générateur de pression selon la revendication 1,
**caractérisé en ce que** la soupape (30) est commandable.

3. Générateur de pression selon la revendication 2,
**caractérisé en ce que** la soupape est commandable électriquement.

4. Générateur de pression selon la revendication 1,
**caractérisé en ce que** la soupape (30) est conçue pour modifier sa position en fonction d'une pression de freinage (HP) régnant dans le circuit de freinage (A, B).

5. Dispositif de freinage hydraulique de véhicule (10) équipé d'un générateur de pression (18) selon l'une des revendications précédentes, destiné à générer de manière régulée une pression de freinage hydraulique (HP) dans un circuit de freinage (A, B).

6. Procédé pour faire fonctionner un générateur de pression (18) selon l'une des revendications 1 à 4 dans un dispositif de freinage hydraulique de véhicule (10), comportant les étapes suivantes :
- l'actionnement de la pompe à pistons multiples (22) ;
- la détection d'une pression de freinage (HP) régnant dans le circuit de freinage (A, B) ;
et
- la commande, en fonction de la pression détectée, de ladite soupape (30) disposée dans l'arrivée de fluide (32) pour réguler l'alimentation en fluide d'au moins une chambre de compression (24).
